# EUROPÄISCHE PATENTSCHRIFT

(11) **EP 1 360 984 B1**
(45) Veröffentlichungstag und Bekanntmachung des Hinweises auf die Patenterteilung: **22.03.2006**
(21) Anmeldenummer: 02024887.8
(22) Anmeldetag: 08.11.2002
(51) Int. Cl.: B01D 63/02, B01D 63/04, B01D 53/22

(54) **Vorrichtung zur Abtrennung einer Komponente aus einem Gasgemisch oder Flüssigkeitsgemisch**
Apparatus for separating a component from a gas mixture or a liquid mixture
Dispositif pour séparer un composant d'un mélange gazeux ou liquide

(30) Priorität: 07.05.2002 DE 10220452
(43) Veröffentlichungstag der Anmeldung: 12.11.2003
(73) Patentinhaber: GKSS-Forschungszentrum Geesthacht GmbH, 21502 Geesthacht (DE)
(72) Erfinder: Kneifel, Klemens, 21502 Geesthacht (DE); Waldemann, Rudolf, 21481 Lauenburg (DE); Wind, Jan, 21481 Lauenburg (DE); Just, Regina, 21502 Geesthacht (DE); Peinemann, Klaus-Victor, 21502 Geesthacht (DE); Albrecht, Wolfgang, 14513 Teltow (DE); Hilke, Roland, 14513 Teltow (DE); Kuhr, Karsten, 21337 Lüneburg (DE)
(74) Vertreter: Grebner, Christian Georg Rudolf

(56) Entgegenhaltungen:
- EP-A- 0 521 495
- DE-A- 4 308 697
- FR-A- 2 222 134
- US-A- 3 993 816
- US-A- 5 174 900
- US-A- 5 182 019
- US-A- 5 232 593

## Beschreibung

Die Erfindung betrifft eine Vorrichtung zur Abtrennung wenigstens einer Komponente aus einem Gasgemisch oder einem Flüssigkeitsgemisch, wobei ein Aufnahmefluid durch den Hohlraum einer Mehrzahl im Wesentlichen parallel beabstandeter, von als Hohlfadenmembranen mit offenen Enden ausgebildeter Membranen strömt und das Gasgemisch oder Flüssigkeitsgemisch im Wesentlichen senkrecht zu den Längsachsen der Hohlfadenmembranen über die Membranen geleltet wird, mehrere Hohlfadenmembranen jeweils in einem Rahmen befestigt aufgespannt sind und eine Mehrzahl von Rahmen zur Bildung eines Rahmen- bzw. Membranstapels ohne dauerhafte Verbindung übereinander angeordnet ist und ein Gehäuse vorgesehen ist. In dem der Rahmen- bzw. Membranstapel unter Bildung eines fluiddichten Raumes für das Aufnahmefluid zwischen den Rahmen und der Gehäuseinnenfläche aufgenommen wird.

Vorrichtungen dieser Art werden auch Gas-/Flüssigkeitskontaktor genannt, wobei ein solcher Kontaktor beispielsweise zur Abtrennung einer Gasgemischkomppnente durch Ad-/Absorption in einer Aufnahmeflüssigkeit eingesetzt wird.

Halbdurchlässige Membranen dienen dabei als Austauschfläche und Barriere zwischen dem Gasgemisch und dem Aufnahmefluid. Das Gasgemisch strömt über die Außenseite der Membranen, die für diese Anwendung regelmäßig sogenannte Hohlfadenmembranen sind, wohingegen das Aufnahmefluid durch das Lumen der Hohlfadenmembranen gefördert wird. Hohlfadenmembranen mit sehr guten Stofftransporteigenschaften stehen für viele Anwendungen wie beispielsweise Ultrafiltration, Mikrofiltration, Dialyse, Gasseparation und Pervaporation bereit.

Die an sich guten Transporteigenschaften der Membranen werden, wie die Praxis gezeigt hat, bedauerlicherweise nur zu einem kleinen Teil ausgenutzt, da die Hohlfadenmembranen in modular aufgebauten Stofftrennvorrichtungen eingesetzt werden, wodurch konstruktionsbedingt Einflüsse wie ungleichmäßige Strömungsverteilung, die sogenannte Kanalbildung, und langsame Strömungsgeschwindigkeiten den Stofftransport behindern. Konventionelle Vorrichtungen, die Hohlfadenmembranen verwenden, wie sie häufig für Flüssig- und Gastrennprozesse, beispielsweise für Umkehrosmose, Ultrafiltration und Gaspermeation eingesetzt werden, bestehen aus einem Hohlfadenbündel mit ungeordneter Verteilung der Hohlfadenmembranen, das an den Enden mit einer geeigneten Vergußmasse versehen beispielsweise in einem rohrförmigen Vorrichtungsgehäuse fixiert ist. Die zu behandelnden Fluide strömen parallel zur Richtung der Hohlfäden. Die Strömungsverteilung auf der Außenseite der Hohlfäden ist ungleichmäßig und im Inneren der Hohlfäden tritt beim Durchströmen ein hoher Druckverlust auf.

Im Stand der Technik ist beispielsweise ein gewebtes Netz aus Hohlfadenmembranen bekannt, das von einem quadratischen Rahmen eingefaßt ist, wobei jede Seite des Rahmens eine rechteckige öffnung enthält, in die die an den gegenüberliegenden Enden offen Hohlfäden münden. Durch diese Öffnungen kann ein Permeat abgeführt werden oder die Öffnungen können als Zu- und Abfuhröffnungen für das Durchströmen der Hohlfadenmembranen mit Lösungen benutzt werden. Der Rahmen mit dem Hohlfadenmembranengewebe wird senkrecht zur Achse eines rohrförmigen Gehäuses angeordnet, wobei ein erstes Fluid durch die freie Fläche in der Mitte des Rahmens senkrecht zu den Achsen der Hohlfäden auf die Außenseite der Flächen strömt und ein zweites oder auch ein drittes Fluid kann durch das Lumen der Hohlfadenmembranen des gewebten Netzes strömen.

Die Fertigung der gewebten Netze aus Hohlfadenmembranen ist extrem aufwendig und kompliziert, wobei der Herstellungsvorgang der netzförmig angeordneten Hohlfadenmembranen vielfach zu einer Beschädigung der Hohlfäden durch die mechanische Beanspruchung beim Webvorgang führt, beispielsweise durch Knicken, Quetschen und Recken, was wiederum zur Folge hat, daß die Auswahl der Membranwerkstoffe und die Abmessungen der Hohlfadenmembranen stark eingeschränkt sind. Nachteilig ist außerdem die durch den Webvorgang zwangsweise erfolgende dichte Packungsdichte der Hohlfadenmembranen, was beim Durchströmen mit dem Gasgemisch einen relativ hohen Druckabfall verursacht. Zudem ist das Schaffen druckdichter getrennter Feed- und Permeaträume äußerst aufwendig, was zu einer Konstruktion führt, die lediglich mit einer Vielzahl von Dichtelementen realisiert werden kann, was wiederum zu einer Vielzahl von Fehlerquellen der bisher bekannten Vorrichtungen führt. Um die Sicherheit der Dichtmaßnahmen zu erhöhen, hat man die einzelnen, die Hohlfadenmembranen tragenden Elemente miteinander zu verkleben versucht, was aber dazu führte, daß ein Austausch beschädigter Hohlfadenmembranelemente nicht möglich war und auch zu wartungszwecken eine Demontage der Vorrichtung aus diesem Grunde ebenfalls nicht möglich war.

US-A-5 232 593 offenbart einen Einsatz mit Hohlfasermembran-Seheiben und ein Modul mit gestapelten Einsätzen. Zur Herstellung von Membranstapein werden mehrere Träger fest miteinander verklebt, wobei in den schlitzartigen Zwischenräumen zwischen zwei Rahmen die Hohlfadenmembranen eingebracht und ebenfalls verklebt sind. Die beschriebene Herstellungsart ist sehr aufwendig. Bei einer Beschädigung nur einer Membran in einem Modulstapel der komplette Stapel ist mit den verklebten Rahmen auszutauschen.

In US-A-5 182 019 ist ferner eine Anordnung von Hohlfasermembranen beschrieben, in der die Hohlfasern in einem Rahmenelement und einzelne Rahmenelemente untereinander vergossen werden.

Aus DE-A-43 08 697 ist ein Verfahren zur Anreicherung eines ersten gasförmigen oder flüssigen Mediums mit einem zweiten Gas oder einer zweiten Flüssigkeit bekannt. Für das Verfahren werden Kapillar-Hohlfasern verwendet, die im wesentlichen senkrecht zur Strömungsachse des gasförmigen oder flüssigen Mediums liegen. Membranelemente mit Kapillar-Hohlfasern senkrecht zur Durchströmrichtung für ein erstes gasförmiges oder flüssiges Medium werden in einem Reaktor eingebaut, wobei sie bezüglich der Strömung kaskadenartig miteinander verbunden werden, so daß ein Teil des zweiten Gases oder der zweiten Flüssigkeit, der nicht von dem ersten gasförmigen oder flüssigen Medium aufgenommen wurde, wieder in Kontakt mit dem ersten gasförmigen oder flüssigen Medium gebracht wird.

Des weiteren sind in US-A-5 174 900 ein Hohlfasertrennmodul und ein Verfahren für dessen Verwendung beschrieben, wobei die Hohlfaserträger mit O-Ringen gegenseitig abgedichtet sind.

Außerdem beschreibt FR-A-2 222 134 weitere Vorrichtung für Hohlfadenmembranen unter Verwendung von Flachdichtungen, O-Ringen und Verklebungen.

Es ist somit Aufgabe der vorliegenden Erfindung, eine Vorrichtung der eingangs genannten Art zu schaffen, mit der eine gleichmäßige Strömungsverteilung auf der Außenseite der Hohlfadenmembranen und eine vollständige Ausnutzung der zur Verfügung stehenden Membranfläche erreicht wird und ein sehr geringer Druckabfall auf der Außenseite der Hohlfadenmembranen eintritt, eine flexible Anpassung an gewünschte Betriebsbedingungen möglich ist und eine einfache Konstruktion, die eine zuverlässige Abdichtung der Fluidräume gegeneinander, eine schnelle Montage sowie Demontage und eine kostengünstige technische Realisierung ermöglicht.

Gelöst wird die Aufgabe gemäß der Erfindung dadurch, dass die Rahmen derart aufgrund einer geeigneten Ausbildung der Form und der Wahl des Werkstoffs derart ausgebildet sind, dass sich die Rahmen ohne gesonderte weitere Dichtungsmaßnahmen oder Dichtungsmittel gegeneinander sowie gegenüber der Gehäuseinnenfläche fluiddicht abdichten.

Die Vorrichtung weist ein Gehäuse auf, in dem der Rahmen- bzw. Membranstapel unter Bildung eines fluiddichten Raumes für das Aufnahmefluid zwischen den Rahmen und der Gehäusefläche aufgenommen wird.

Der wesentliche Vorteil der erfindungsgemäßen Lösung besteht darin, daß eine sehr gute Strömungsverteilung des Gasgemisches auf der Außenseite der Hohlfadenmembranen erreicht wird und so ein hoher Stofftransport bei sehr niedrigem Druckabfall ermöglicht wird. Alle Hohlfadenmembranen der Vorrichtung werden dabei gleichmäßig vom sie überströmenden Gasgemisch erfaßt und im Hinblick an die gewünschten Betriebsbedingungen kann die erfindungsgemäße Vorrichtung in bezug auf ihre Dimension leicht angepaßt werden. Die erfindungsgemäße Lösung schafft auch die Möglichkeit einer einfachen modularen Bauweise und ist leicht und kostengünstig technisch realisierbar.

Je nach den gewünschten Betriebsbedingungen kann eine Mehrzahl von Rahmen zur Bildung eines Rahmens- bzw. Membranstapels übereinander angeordnet sein. Da alle Rahmen mit den darin aufgenommenen Hohlfadenmembranen identisch sind, kann durch die Anzahl der übereinandergestapelten Rahmen eine unmittelbare Anpassung an die gewünschten Leistungs- und Betriebsbedingungen mittels der erfindungsgemäßen Vorrichtung bewerkstelligt werden, was hingegen bei der im Stand der Technik beschriebenen, oben erwähnten, mit gewebten Hohlfadenmembranen versehenen Einrichtungen, nicht oder nur dann möglich ist, wenn gesonderte Dichtelemente zwischen den Rahmen angeordnet werden. Auch ein Stapel aus übereinander angeordneten Rahmen gemäß der Erfindung ist in hohem Maße mechanisch stabil und es treten keine Probleme im Zusammenhang mit der Herstellung und der Montage auf.

Gemäß einer vorteilhaften Ausgestaltung der Vorrichtung bilden die offenen Enden der Hohlfadenmembranen, die im Rahmen aufgespannt sind, deren Einlaß bzw. deren Auslaß für das die Hohlfadenmembranen durchströmende Aufnahmefluid. Dadurch ist es vorteilhafterweise möglich, quasi scheibenförmige, mit Hohlfadenmembranen versehene Rahmen bereitzustellen, die zwar dichtend aufeinanderliegen können, wenn die Vorrichtung ihre bestimmungsgemäße Funktion ausführen soll, gleichwohl aber keine dauerhafte Verbindung wie beispielsweise beim Kleben ausgebildet wird, was für Wartungs-, Montage- und Austauschzwecke von außerordentlichem Vorteil ist. Aufgrund des Werkstoffes des Rahmens sowie der Form ist eine direkte Abdichtung der einzelnen Rahmen gegen beispielsweise ein Gehäuserohr und damit die hydraulische Trennung des Raumes für das Aufnahmefluid in eine Zuströmkammer und eine Abströmkammer erreicht. Gleichzeitig ist eine direkte Abdichtung der einzelnen Rahmen gegeneinander und somit gegen den Feedraum, d.h. den Raum, durch den das Gasgemisch strömt, möglich.

Es hat sich herausgestellt, daß ein sehr gutes Abtrennungsergebnis erzielt wird, wenn der Abstand zweier benachbarter Hohlfadenmembranen voneinander im Bereich des 1,5- bis 4-fachen des äußeren Durchmessers der Hohlfadenmembranen liegt.

Vorzugsweise ist der Rahmen im wesentlichen kreisförmig ausgebildet, was für die Herstellung der Rahmen' einschließlich der darin aufgenommenen Kohlfadenelemente außerordentlich günstig ist. Es sei aber darauf hingewiesen, daß die Rahmen nicht in jedem Falle kreisförmig ausgebildet sein müssen. Es sind auch beliebige n-eckige Rahmen in bezug auf den Rahmenquerschnitt (in der Projektion auf den Rahmen) möglich und auch beliebige andere geometrische Rahmenformen.

Um bei übereinandergestapelten Rahmen ein möglichst effektives Überströmen der äußeren Fläche der Hohlfadenmembranen der Rahmen zu erreichen, werden die aufeinandergestapelten Rahmen gegenseitig verdreht, wobei immer noch gewährleistet sein soll, daß ein möglichst gleichmäßiges Überströmen der äußeren Flächen der Hohlfadenmembranen einerseits gewährleistet ist, der zwangsläufig aber auftretende Druckabfall bei einer Mehrzahl von aufeinandergestapelten Membranen aber noch in vertretbaren Grenzen gehalten werden soll, weist der Rahmen Kadierungselemente auf, mit denen eine gegenseitige, feste Ausrichtung der Längsachsen der Ebene der Hohlfadenmembranen gestapelt übereinander angeordneter Rahmen bewirkt wird. Diese Kodierung macht es möglich, daß die aufeinandergestapelten Rahmen immer fest um die Kodierungsstrecke versetzt zueinander angeordnet werden können, wodurch auch eine einfache Montage beim Zusammenstellen des Rahmen- bzw. Membranstapels möglich ist.

Eine einfache Form der Kodierungselemente ist vorzugsweise dadurch erreichbar, daß in den Rahmen eine Mehrzahl definiert voneinander beabstandeter Löcher ausgebildet ist, die bei aufeinander angeordneten Rahmen bzw. bei einem Rahmen, bzw. Membranstapel übereinander fluchtend angeordnet sind, so daß ein definierter Versatz entsprechend der gewählten Lochabstände der einzelnen Rahmen zueinander möglich ist.

Besonders vorteilhaft ist es dabei, daß die Löcher bei kreisförmig ausgebildetem Rahmen selbst wieder auf einem Teilkreis ausgebildet sind, so daß der Rahmen lediglich um den Teilkreis gedreht zu werden braucht, so daß die dort ausgebildeten Löcher übereinander gestapelter Rahmen fluchten. Da alle Rahmen mit derart ausgebildeten und angeordneten Löchern versehen sein können, ist lediglich eine Rahmengrundform für die gesamte Vorrichtung erforderlich, was zudem für die Herstellung und Bevorratung der Rahmen von außerordentlichem Vorteil ist.

Bei einer weiteren vorteilhaften Ausgestaltung der Vorrichtung ist in dem Rahmen- bzw. Membranstapel im wesentlichen zwischen jeweils zwei übereinander angeordneten Rahmen ein Abstandselement angeordnet, womit eine Vergrößerung der mechanischen Stabilität des Rahmenstapels auf einfache Weise möglich ist und nochmals die Strömungsverhältnisse beeinflußt werden können.

Das Abstandshalteelement kann Stützelemente aufweisen, die die jeweils benachbarten Hohlfadenmembranen der Rahmen stützen, wenn beispielsweise die Hohlfadenmembranen einer starken Strömung des Gasgemisches ausgesetzt sind, d.h. auch mechanisch stark beansprucht werden. Diese Stützelemente können grundsätzlich beliebig geeignet ausgebildet sein, soweit sie die Stützfunktion für die Hohlfadenmembranen erfüllen können. Vorzugsweise weist das Abstandselement einen Rahmen nach Art des Rahmens für die Aufnahme der Hohlfadenmembranen auf, d.h. es hat im wesentlichen die gleiche äußere geometrische Form in bezug auf die Projektion in der Draufsicht, wie der Rahmen für die Aufnahme der Hohlfadenmembranen, wobei der Rahmen wenigstens einen Steg aufweist, der zwei im wesentlichen gegenüberliegende Seiten des Rahmens verbindet, und wobei der Steg die vorangehend erwähnte Stützfunktion für die Hohlfadenmembranen der jeweils benachbarten Hohlfadenmembranen der Rahmen ausübt.

Die Hohlfadenmembranen der einzelnen Rahmen der Vorrichtung können bei aufeinandergestapelten Rahmen alle parallel vom Aufnahmefluid durchströmt werden. Für bestimmte Anwendungsfälle ist es aber vorteilhaft, die Vorrichtung derart weiterzubilden, daß in dem Rahmen bzw. Membranstapel wenigstens ein nach Art des Rahmens für die Aufnahme der Hohlfadenmembranen ausgebildetes, rahmenförmiges Umlenkelement für das Aufnahmefluid angeordnet ist. Dadurch ist es erreichbar, daß beispielsweise eine mäanderförmige Durchströmung des Aufnahmefluids durch die gesamte Vorrichtung, d.h. von Rahmen zu Rahmen, möglich ist, oder auch bei entsprechend angeordneten Umlenkelementen eine teilweise parallele und teilweise reihenförmige Umlenkung des Aufnahmefluids durch die Hohlfadenmembranen der aufeinandergestapelten Rahmen zu ermöglichen.

Für diese Umlenkung des Aufnahmefluids ist das Umlenkelement der vorrichtung vorteilhafterweise derart ausgebildet, daß es einen ersten Randbereich aufweist, der in der Ebene des Umlenkelementes gegenüber einem zweiten Randbereich der Ebene des Umlenkelementes für den Durchtritt des Aufnahmefluids schmaler ausgebildet ist. Dadurch wird erreicht, daß das Aufnahmefluid um den schmaler ausgebildeten ersten Randbereich herumströmen kann, nachdem es aus den Auslässen der darunter und/oder darüber angeordneten Rahmen mit den darin angeordneten Hohlfadenelementen austritt, quasi das Umlenkelement überstreicht und dann an einem anderen Umlenkelement, das entgegengesetzt zum vorbeschriebenen angeordnet ist, über den dort ausgebildeten schmaleren Randbereich wiederum strömen kann und in die Einlässe der Hohlfadenmembranen des benachbart angeordneten Rahmens hineinströmen kann.

Diese Konstruktion des Umlenkelementes ist einfach realisierbar und letztlich auch beliebig im Stapel der Rahmen einsetzbar, und zwar an den jeweils gewünschten Stellen.

Als Gehäuse eignen sich beliebige geeignete Rohrabschnitte, d.h. Halbzeuge aus beliebigen geeigneten Werkstoffen. Aufgrund dieser vorteilhaften Ausgestaltung ist auch die Bildung eines fluiddichten Raumes auf sehr einfache Weise möglich, d.h. der fluiddichte Raum, in dem das Aufnahmefluid strömt, ist aufgrund der quasi flächengleichen Ausbildung des Rahmens für die Hohlfadenmembranen, des Rahmens für das Abstandselement und des Rahmens für das Umlenkelement ohne gesonderte weitere Maßnahmen, mit Ausnahme der stirnseitigen Dichtung des Gehäuses relativ zum fluiddichten Raum, einfach realisierbar.

Vorteilhaft ist es, den fluiddichten Raum derart auszugestalten, daß im Gehäuse ein Zulauf und ein Ablauf für das Aufnahmefluid angeordnet ist, was beispielsweise durch einfache Bohrungen bzw. Löcher in der Wandung des Gehäuses realisierbar ist.

Um die mechanische Stabilität des auf vorangehend beschriebene Weise aufgebauten Stapels an Rahmen mit den Hohlfadenmembranen, an Abstandselementen und an Umlenkelementen mechanisch zu schützen, insbesondere am Einlaß und/oder am Auslaß des Gehäuses für das Durchströmen des Gehäuses mit dem Gasgemisch, ist der Rahmen bzw. Membranstapel wenigstens mit einem nach Art des Rahmens für die Aufnahme der Hohlfadenmembranen ausgebildeten Rahmen versehen, der eine netzartige Struktur aufweist, die den Rahmen überspannt und somit den Einlaß bzw. den Auslaß des Gehäuses netzartig begrenzt. Die netzartige Struktur kann in das für den Zusammenhalt des Membranstapels notwendige Abschlußelement eingefügt werden.

Um die Hohlfadenmembranen gegen das bisweilen sehr aggressive Medium, das flüssig aber auch gasförmig sein kann, zu schützen, ist die Hohlfadenmembran innen mit einer Schutzschicht versehen, die beispielsweise vorteilhafterweise aus Silikon bestehen kann.

Die Hohlfadenmembran selbst kann für bestimmte Anwendungsfälle vorteilhafterweise mikroporös ausgebildet sein.

Die Vorrichtung eignet sich zur Verwendung für das Be- und entgasen von Flüssigkeiten, das Befeuchten von Gasen, für Membrantrennprozesse wie Pervaporation, Dialyse sowie Gastrennung und für Filtrationsprozesse mit halbdurchlässigen Hohlfadenmembranen.

Die Erfindung wird nun nachfolgend anhand eines Aus führungsbeispieles eingehend beschrieben. Darin zeigen:
- Fig. 1: in der Draufsicht einen typischen Rahmen, der eine Mehrzahl voneinander beabstandeter Hohlfadenmembranen aufnimmt,
- Fig. 2: einen Rahmen gemäß Fig. 1 in der Grundposition zur Bildung eines Rahmen- bzw. Membranstapels,
- Fig. 3: zwei aufeinandergestapelte Rahmen, die jeweils um zwei Teilkreisabstände zueinander verdreht sind,
- Fig. 4: zwei aufeinandergestapelte Rahmen, die jeweils um einen Teilkreisabstand zueinander verdreht sind,
- Fig. 5: drei aufeinandergestapelte Rahmen, die jeweils um einen Teilkreisabstand zueinander verdreht sind,
- Fig. 6: horizontale und vertikale Positionen der Hohlfadenmembranen in einem Membranstapel,
- Fig. 7: in stark schematisiertem Schnitt einen Ausschnitt aus einem Rahmen- bzw. Membranstapel und den Rahmen- bzw. Membranstapel in der Figur oben und unten jeweils abschließenden Abschlußelementen,
- Fig. 8: ein Abstandselement in der Draufsicht mit einem der Stützung der Hohlfadenmembranen dienenden Steg,
- Fig. 9: ein Umlenkelement mit einem der Stützung der Hohlfadenmembranen dienenden zusätzlichen Steg,
- Fig. 10: einen Schnitt durch ein Gehäuse der Vorrichtung, wobei in dem Gehäuse ein Rahmen bzw. Membranstapel, ggf. unter Zwischenlage von Abstandselementen und Umlenkelementen, angeordnet ist,
- Fig. 11: eine Draufsicht auf das rohrförmige Gehäuse gemäß Fig. 10,
- Fig. 12: ein den Rahmen- bzw. Membranstapel gegebenenfalls beidseitig abschließender Rahmen mit netzartiger Struktur, die den Rahmen überspannt,
- Fig. 13: in perspektivischer Darstellung eine Vorrichtung mit Gehäuse, in der ein Rahmen- bzw. Membranstapel angeordnet ist,
- Fig. 14: ein Rahmen- bzw. Membranstapel in kompletter Form zum Einsatz in das Gehäuse gemäß Fig. 13, eine andere Ansicht der Vorrichtung gemäß Fig. 13 zeigend,
- Fig. 15: in Form eines Schaubildes den Druckabfall in Abhängigkeit vom Volumenstrom bei einer unterschiedlichen Anzahl von Rahmen mit aufgenommenen Hohlfadenmembranen,
- Fig. 16: in Form eines Schaubildes den Druckabfall in Abhängigkeit von der Ausrichtung der mit Hohlfadenmembranen versehenen Rahmen,
- Fig. 17: ein Schaubild zur Darstellung des Einflusses des Durchmessers der mit Hohlfadenmembranen versehenen Rahmen, den Druckabfall in Abhängigkeit vom Luft-Volumenstrom bei unterschiedlichen Rahmen darstellend, und
- Fig. 18: ein Schaubild zur Darstellung des Druckabfalles in Abhängigkeit von der Anzahl der mit Hohlfadenmembranen versehenen Rahmen in einer Vorrichtung, wobei die Hohlfadenmembranen um 30° versetzt sind und Abstandselemente zwischen den Rahmen angeordnet sind.

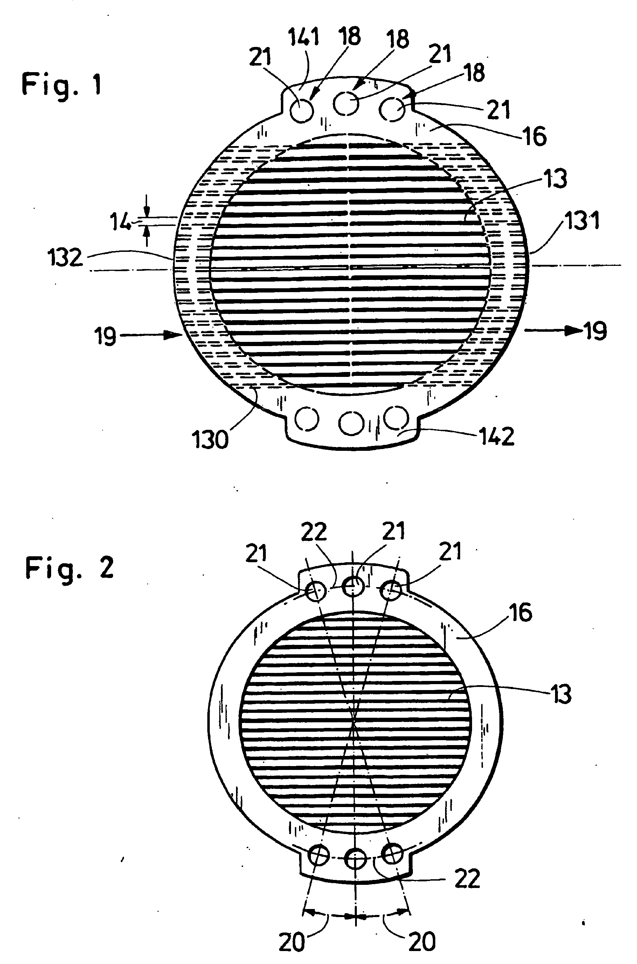

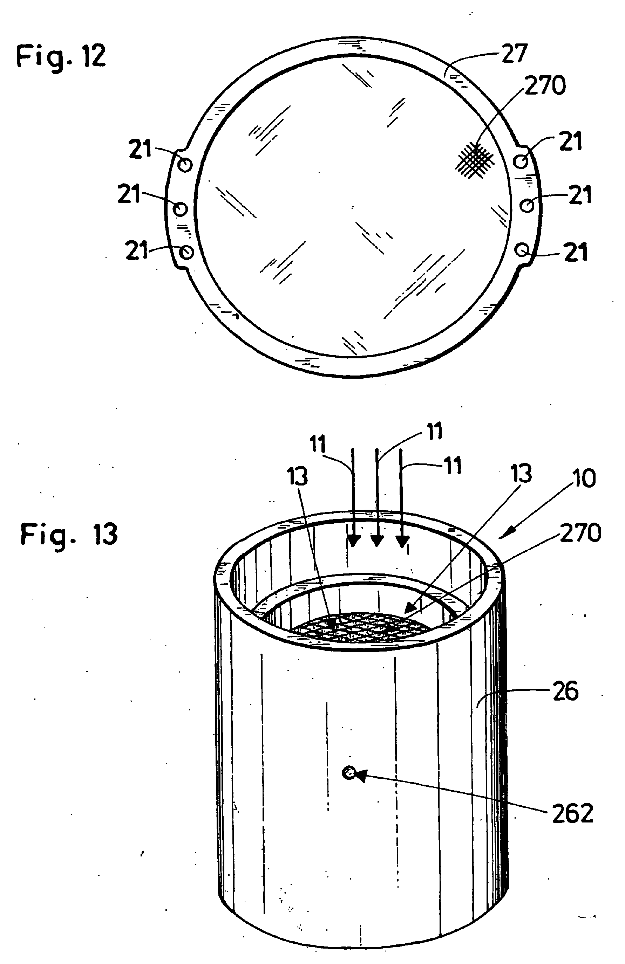

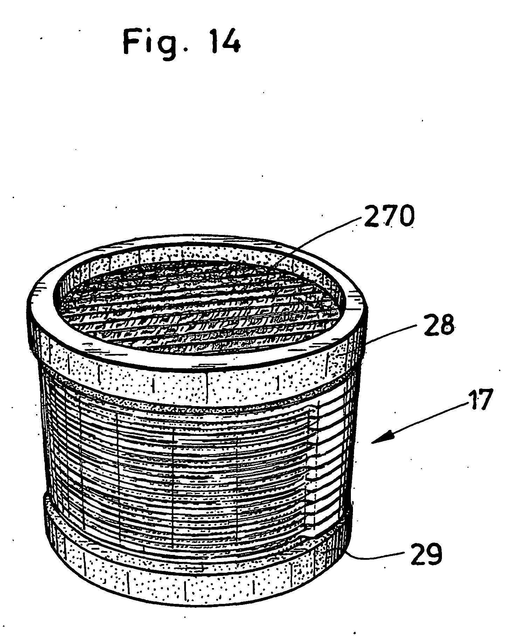

Bevor im einzelnen auf den Aufbau der in Fig. 13 in ihrer Gesamtheit dargestellten Vorrichtung 10 eingegangen wird, wird zunächst auf Fig. 1 Bezug genommen, anhand der der grundsätzliche Aufbau des Rahmens 16 beschrieben wird, der, wenn dieser in einer Mehrzahl aufeinandergestapelt wird, einen Rahmen- bzw. Membranstapel 17, vergleiche insbesondere die Fig. 14, bildet.

Der Rahmen 16, der hier im wesentlichen kreisförmig ausgebildet ist (in der Projektion in der Draufsicht auf den Rahmen 16 gesehen), umfaßt eine Mehrzahl von Hohlfadenmembranen 13, die im Rahmen 16 aufgespannt sind. Die einzelnen Hohlfadenmembranen 13 sind in einem definierten Abstand 14 voneinander beabstandet. Die Abstände 14 können, je nach Betriebsweise der Vorrichtung 10, von Vorrichtung 10 zu Vorrichtung 10 bzw. von Rahmen 16 zu Rahmen 15 variieren.

Jede aufgespannte Hohlfadenmembran 13 definiert, da sie im Rahmen 16 gestreckt angeordnet ist, eine Längsachse sowie jeweils einen Einlaß 131 und einen Auslaß 132 des Hohlraumes der Hohlfadenmembran 13. Die Hohlfadenmembran 13 wird von einem Aufnahmefluid durchflossen, worauf noch weiter unten im einzelnen eingegangen wird.

Die Rahmen 16 werden in einer entsprechend ausgebildeten Form gegossen, wobei in diese Form die Hohlfadenmembranen 13, die zuvor auf geeignete, an sich bekannte Weise hergestellt worden sind, eingebettet werden, und wobei nachfolgend die hier nicht gesondert dargestellte Form mit geeigneten fließfähigen Kunststoff-Werkstoffen gefüllt wird, die ansehlißBend aushärten. Der Werkstoff, der den Rahmen 16 bildet, umfaßt die Hohlfadenmembranen 13 dichtend. Als Gießwerkstoff für die Rahmen 16 kann beispielsweise Epoxydharz, Polyurethan oder auch Silikon verwendet werden. Zur mechanischen Verstärkung des Rahmens 16 kann dieser zudem mit einer mechanischen Verstärkung (nicht dargestellt) versehen sein, beispielsweise einem Netzgewebe aus Kunststoff, Glas- und/oder Kohlefasern.

Nach dem Aushärten des fließfähigen Werkstoff werden die während des Herstellungsvorgangs regelmäßig überstehenden Enden der Hohlfadenmembranen 13 abgeschnitten, wobei aber auch eine Stanzung und dergleichen möglich ist.

Der Rahmen 16, der hier, wie schon erwähnt, kreisförmig ausgebildet ist, kann allerdings grundsätzlich jede beliebige andere symmetrische und auch unsymmetrische geometrische Form (in der Projektion auf die Draufstcht das Rahmens 16) haben. Der Rahmen 16 umfaßt darüber hinaus zwei gegenüberliegende, laschenartig ausgebildete Bereiche 141, 142, die Ober den kreisförmigen Umfang des Rahmens 16 hinausstehen.

In den Laschen 141, 142 sind eine Mehrzahl von Kodierungselementen 18 angeordnet, die hier in Form von Löchern 21 ausgebildet sind. Durch diese Löcher 21 kann beispielsweise wenigstens ein stangenförmiges Element hindurchgeführt werden, mit der eine gegenseitige, feste Ausrichtung der Längsachsen der Ebene 19 der Hohlfadenmembranen 13 bewirkt wird, wenn beispielsweise eine Mehrzahl von Rahmen 16 zur Bildung eines Rahmen- bzw. Membranstapels 17 übereinander angeordnet ist. Darauf wird im einzelnen noch im Zusammenhang mit den nachfolgend beschriebenen Figuren 2, 3, 4 und 5 eingegangen. Die Löcher 21 sind, ausgehend von einem gedachten Mittelpunkt des Rahmens 16, auf einem Teilkreis 22, d.h. in gleichem Radius vom gedachten Mittelpunkt des Rahmens 16 beabstandet, ausgebildet. In dem vorliegenden Ausführungsbeisplel des Rahmens 16 sind jeweils gegenüberliegend drei Löcher 21 in den Laschen 141, 142 ausgebildet. Der Bogenabstand 20 zwischen jeweils zwei benachbarten Löchern 21 ist hier gleich.

Zur Erläuterung der Möglichkeiten des Aufeinanderstapelns der Rahmen 16 zur Bildung eines Rahmen- bzw.

Membranstapels 17, werden (beispielhaft) drei Rahmen 16 aufeinandergestapelt, ausgehend von einem Rahmen 16, wie er in Fig. 2 dargestellt ist.

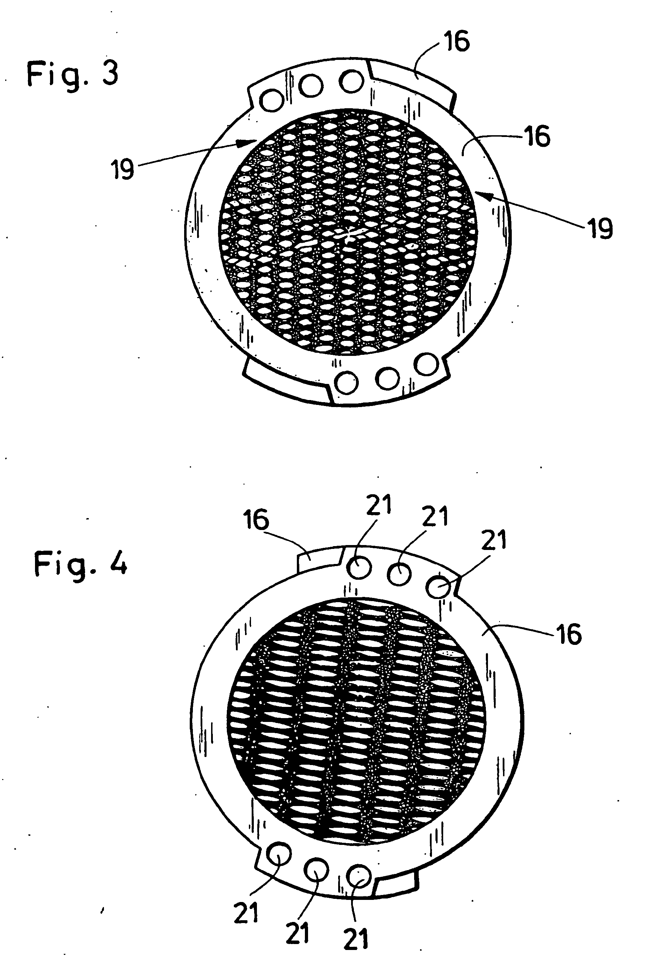

Fig. 3 zeigt zwei aufeinandergestapalte Rahmen 16, die um 30' zueinander gedreht sind und das aus der Fig. 3 ersichtliche Hohl fadenmembranmuster zeigen.

Fig. 4 zeigt zwei um 15' zueinander gedrehte Rahmen.

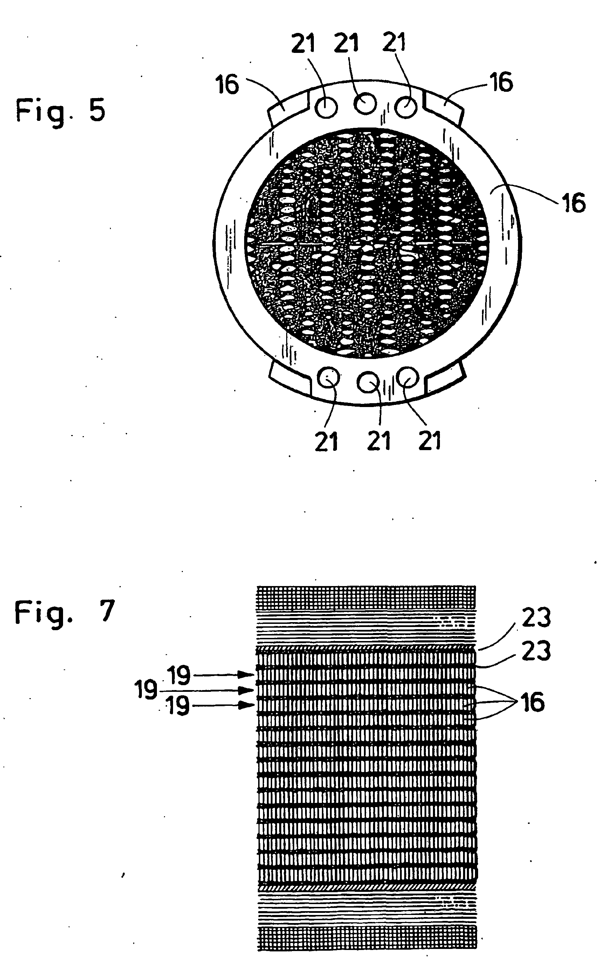

Fig. 5 zeigt die besagten drei aufeinandergelegten Rahmen 16, die zueinander um jeweils 15' verdreht sind.

Auf diese Weise läßt sich, wenn ein eine beliebige Mehrzahl von Rahmen 16 aufweisender Rahmen- bzw. Membranstapel 17 gebildet wird, ein Rahmen- bzw. Membranstapel 17 schaffen, wie er beispielsweise in der Fig. 14 dargestellt ist. Die Rahmen 16 können prinzipiell beliebig zueinander gedreht ausgebildet sein, müssen also nicht die strenge Verdrehung, wie sie hier beispielsweise im. Zusammenhang mit dem Teilkreis bzw. Bogenabstand von 15° beschrieben worden ist, aufweisen. Da die Löcher 21 bei der vorangehend beschriebenen Ausgestaltung des Rahmen- bzw. Membranstapels 17 zueinander fluchten, kann diese Stellung beispielsweise mittels einer hier nicht dargestellten, durch die jeweiligen Löcher 21 der Rahmen 16 des Rahmen- bzw. Membranstapels 17 hindurchgesteckten Stange fixiert werden.

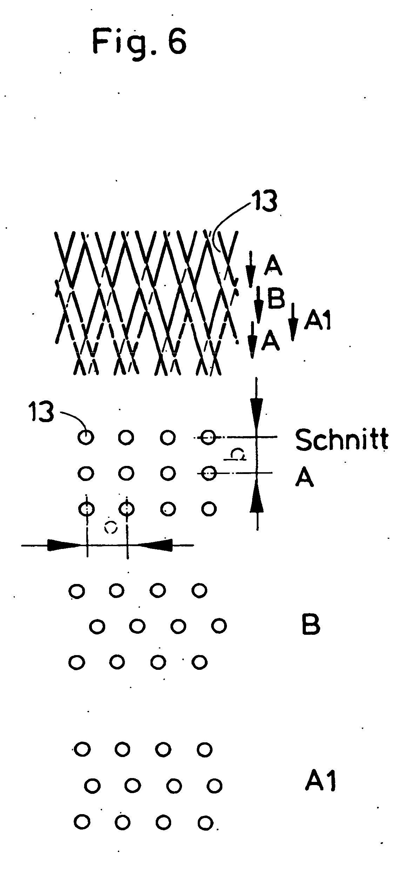

Fig. 6 zeigt die horizontale und vertikale Position der Hohlfadenmembranen 13 in einen Membranstapel 17 mit um 30' versetzen Rahmen 16. Es sind drei Schnittsbenen dargestellt. Dabei ist "a" der horizontale Abstand der Hohlfadenmembranen in einem Rahmen 16 und "b" der vertikale Abstand zwischen den Hohlfadenmembranen 13 benachbarter Rahmen. "a" und "b" werden als Vielfaches des äußeren Durchmessers der Hohlfadenmembranen angegeben.

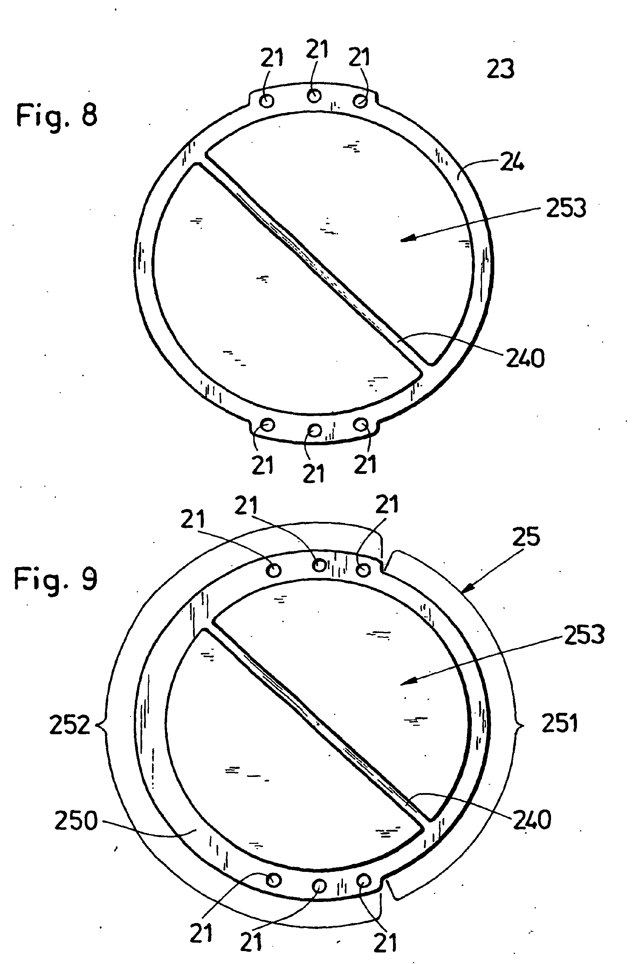

Aus Fig. 7 ist in sehr stark schematisierter Form ein Ausschnitt eines Teilschnitts durch einen fertigen, aus einer Mehrzahl von Rahmen 16 bestehender Rahmen- bzw. Membranstapel 17 ersichtlich. Prinzipiell sind zwischen zwei Rahmen dort noch jeweils Abstandselemente 23 angeordnet, wie sie beispielsweise in Fig. 8 dargestellt sind. Die Abstandselemente 23 weisen ebenfalls eine rahmenförmige Struktur auf, ähnlich der der Rahmen 16, die die Hohlfadenmembranen 13 aufnehmen. Die dort ausgebildeten Löcher 21 sind ebenfalls wie die Löcher 21 des Rahmens 16 voneinander beabstandet und haben gleichen Abstand von einem gedachten Mittelpunkt des kreisförmigen Rahmens Z4 des Abstandselements 23. Das Abstandselement 23 weist einen Steg 240 auf, der die gegenüberliegenden Seiten des Rahmens 24 miteinander verbindet. Es sei darauf hingewiesen, daß der Steg 240 hier lediglich beispielhaft ausgebildet ist, es können auch eine Mehrzahl von Stegen vorgesehen sein, die der möglichen Anlage der Hohlfadenmembranen 13 der Rahmen 16 dienen, wenn das Gasgemisch, das im wesentlichen rechtwinkelig zu den Hohlfadenmembranen 13 auf deren Oberfläche auftrifft, die Hohlfadenmembranen 13 während des Betriebes sehr stark elastisch verformt. Diese Verformungslänge wird begrenzt durch die Anlage der HohlfadenMembranen 13 an dem Begrenzungselement, in diesem Falle an dem Steg 240.

Eine Abstandsfunktion und/oder eine Stützfunktion kann ebenfalls das in Fig. 9 dargestellte Umlenkelement 25 aufweisen. Das Umlenkelement 25 ist ebenfalls ähnlich dem Rahmen 16 ausgebildet, der die Hohlfadenmembranen 13 aufnimmt. Das Umlenkelement 25 weist an seinem äußeren Rand einen ersten Randbereich 251 und einen zweiten Randbereich 252 auf. Der erste Randbereich 251 des Rahmens 250 ist in der gedachten Ebene 253 des Umlenkelements gegenüber dem zweiten Randbereich 252 schmaler ausgebildet. Der schmalere Randbereich 251 schafft eine Durchgangsöffnung relativ zur Innenseite eines Gehäuses 26, und zwar für das Aufnahmefluid, das in die Einlässe 131 der Hohlräume 130 der Hohlfadenmembranen 13 der jeweils benachbarten Rahmen einfließt bzw. aus den Auslässen 132 die Hohlfadenmembranen 13 verläßt. Der zweite Randbereich 252 ist in der Ebene 253 des Umlenkelementes 25 derart bemessen, daß er an der Gehäuseinnenfläche 261 anliegt und bei Verwendung eines geeigneten Werkstoffs stirnseitig gegen die Wand eines Gehäuses 26 abdichtet. Die Löcher 21 im Umlenkelement 25 sind gleich zueinander beabstandet und haben einen gleichen Abstand zu einem gedachten Mittelpunkt des kreisförmigen Umlenkelementes 25, wie sie im Zusammenhang mit den Löchern der Rahmen 26 bzw. des Abstandselements 23 beschrieben worden sind. Auch das Umlenkelement 25 kann, wie im Zusammenhang mit dem Abstandselement 24 schon beschrieben, einen Steg 240 oder sonstige geeignete Stützelemente aufweisen, auf denen sich die Hohlfadenmembranen 13 aufgrund der elastischen Verformung infolge des auf sie auftretenden Gasgemisches 11 abstützen. Des weiteren dient der Steg 240 auch zur Eigenstabilisierung des Umlenkelements 25, was gleichermaßen für das Abstandselement 23 gilt.

Der Rahmen- bzw. Membranstapel 17, wie er beispielsweise in der Fig. 14 zum Einbringen in ein Gehäuse 26, vergleiche die Figuren 19 und 11, vorkonfektioniert ist, kann ebenfalls einen kreisförmigen Rahmen 27, vergleiche Fig. 12, aufweisen, und zwar in bezug auf die Darstellung der Fig. 14 oben und/oder unten den Rahmen- bzw. Membranstapel 17 begrenzen. Der Rahmen 27 weist eine ähnliche Struktur wie der Rahmen 24 des Abstandselements 23 auf, d.h. im wesentlichen in bezug auf seine äußere Dimension und seine Formgebung, wobei auch die Löcher 21, wie sie im Zusammenhang mit dem Rahmen 16, dem Abstandselement 23 und dem Umlenkelement 25 beschrieben worden sind, gleiche Größe, gleichen Abstand voneinander und einen gleichen Abstand zu einem gedachten Mittelpunkt des Rahmens 27 aufweisen. Der Rahmen 27 ist mit einer netzartigen Struktur 270 abgedeckt. Die netzartige Struktur 27 kann auch direkt in eine entsprechende Fuge des Druckstückes 28 eingefügt werden.

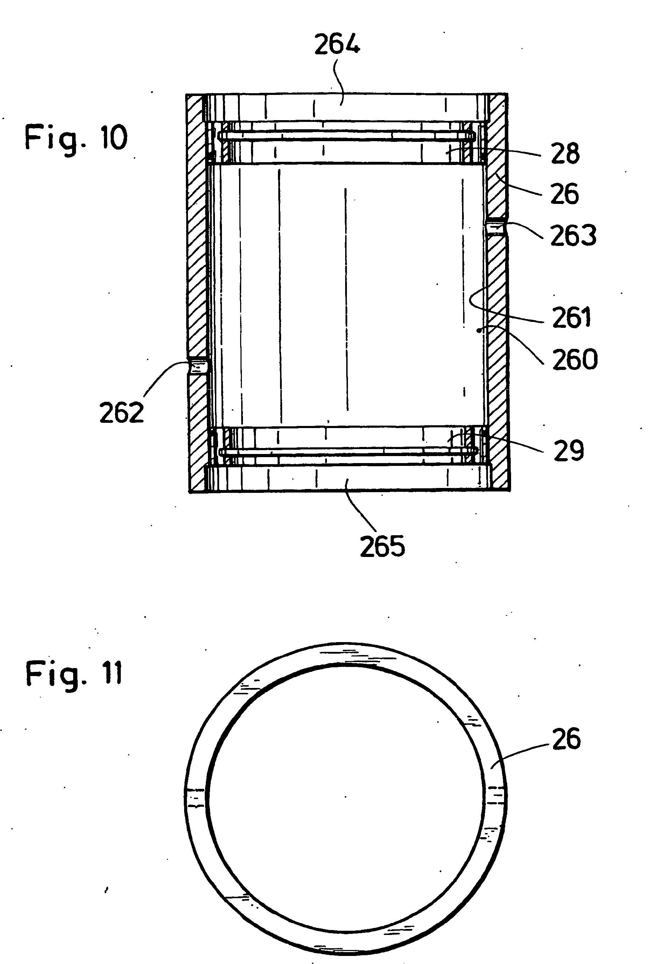

Der in Fig. 14 dargestellte Rahmen- bzw. Membranstapel 17 weist beidseitig der Membranstapelenden ringförmige Druckstücke 28, 29 auf, die in Verbindung mit dem Gehäuse 26, vergleiche Fig. 10, den Rahmen- bzw. Membranstapel 17 druckdicht aufnehmen. Dabei liegen die Rahmen 16, die Abstandselemente 23, die Umlenkelemente 25 und die beidseitigen Rahmen 27 mit deren netzartiger Struktur 270 derart druckdicht aneinander, daß zwischen dem Rahmen- bzw. Membranstapal 17 und der Gehäuseinnenfläche 261 ein fluiddichter Raum 260 geschaffen wird, in dem das Aufnahmefluid von einem Zulauf 262 entweder parallel, teilweise parallel oder mäanderförmig zu einem Ablauf 263 fließt, und zwar durch die jeweiligen Hohlfadenmembranen 13 der Rahmen 16.

Durch geeignete Ausbildung der Form und der Wahl des Werkstoffs das Rahmens 16 und/oder der Abstandselemente 23 und/oder der Umlenkelemente 25 und/oder der beidseitigen Rahmen 27 kann ohne gesonderte weitere Dichtungsmaßnahmen oder Dichtungsmittel der fluiddichts Raum 260 im Zusammenwirken mit bzw. gegenüber der Gehäuseinnenfläche 261 geschaffen werden.

Dabei wird, vergleiche Fig. 13, das Gasgemisch 11 im wesentlichen senkrecht auf die Hohlfadenmembranen 13 geleitet, wobei das Gasgemisch 11 das im wesentlichen ringförmige Gehäuse 26 von der Einlaßöffnung 264 zur Auslaßöffnung 265 durchströmt und dabei eine oder mehrere vorbestimmte Komponente bzw. Komponenten des Gasgemisches 11 durch die Wandung der Hohlfadenmembran 13 permeiert bzw. permeieren und vom Aufnahmefluid, das die Hohlfadenmembranen 13 durch die Hohlräume 130 durchströmt, ad-/absorbiert wird.

Nachfolgend werden einige Meßergebnisse anhand von 5 Beispielen dargelegt, die die außergewöhnlich guten Merkmale der Erfindung praktisch bestätigen.

Der beim Durchströmen des Rahmen- bzw. Membranstapels 27 mit Gasgemisch 11 in Form von Luft - Strömungsrichtung senkrecht zur Achse der Hohlfadenmembranen 13 - auftretende Druckabfall wurde gemessen. Zur Messung des Volumenstromes wurde ein Anemometer benutzt. Der Druck wurde am Eingang und Ausgang der Vorrichtung 10 mit Schrägrohrmanometern gemessen. Variiert wurden die Anzahl und die Ausrichtung der mit Hohlfadenmembranen 13 versehenen Rahmen 16. Der äußere Durchmesser der verwendeten Hohlfadenmembranen 13 betrug in allen Fällen 1,0 mm. Das Gasgemisch 11 wurde über die äußere Fläche der Hohlfadenmembranen 13 geführt.

Als Vergleich wurden auch zwei konventionelle Vorrichtungen (Hohlfadenmembranbündel in einem rohrförmigen Gehäuse) gemessen.

Beispiel 1: Es wurde eine erfindungsgemäße Vorrichtung 10 mit Queranströmung hergestellt und gemessen. Die Vorrichtung 10 wurde mit je 40 mit Hohlfadenmembranen 13 versehenen Rahmen 16 des Typs II bestückt. Der innere freie Durchmesser dieser Rahmen 16 des Typs II betrug 165 mm, die Dicke des Rahmens 26 betrug 2 mm. Die Rahmen 16 waren mit je 51 Hohlfadenmembranen 13 bestückt. Die Ausrichtung der Hohlfadenmembranen 13 wurde von 30° versetzt vorgenommen. Zwischen den Rahmen 16 wurden Abstandshalterrahmen 24 eingefügt. Die Abstandshalterrahmen 24 wurden so plaziert, daß sich die Querstege aufeinanderfolgender Rahmen 24 im Winkel von 90° kreuzten. Die Dicke der Abstandshalterrahmen 24 betrug 1 mm. Die Abstände zwischen den Hohlfadenmembranen 13 betrugen: a = 3; b = 3. Die äußere Membranfläche betrug 0,83 m². Als Vergleich wurden zwei konventionelle Vorrichtungen mit der Bezeichnung "A" und "B" gemessen. Die Vorrichtungen hatten folgende Eigenschaften:

Innerer Durchmesser des Gehäuserohres: A = 43 mm; B = 55 mm Äußerer Durchmesser der Hohlfadenmembranen: A = 1,2' m; B = 1,0 mm. Anzahl Hohlfadenmembranen im Bündel: A = 660; B = 1300. Äußere Membranfläche A = 0,76 m²; B = 1,3 m² Die Anzahl der Hohlfadenmembranen pro Bündel wurde so ausgewählt, daß eine "Kanalbildung" durch zu lockere Packung vermieden wird. Die Ergebnisse sind in der Tabelle nachfolgend dargestellt:

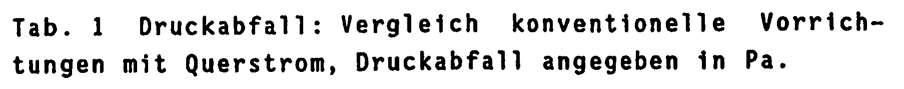

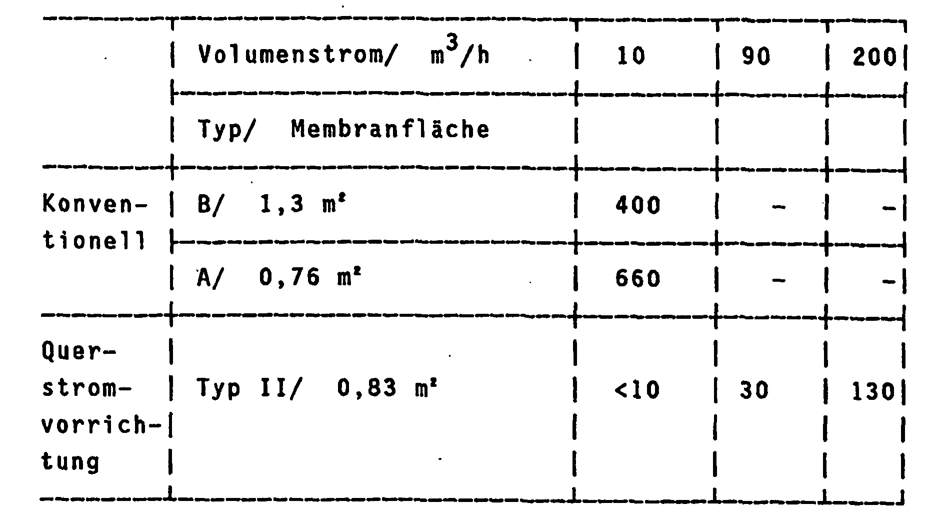

Der Druckabfall bei der erfindungsgemäßen Vorrichtung 10 ist deutlich geringer als der bei den konventionellen Typen gemessene.

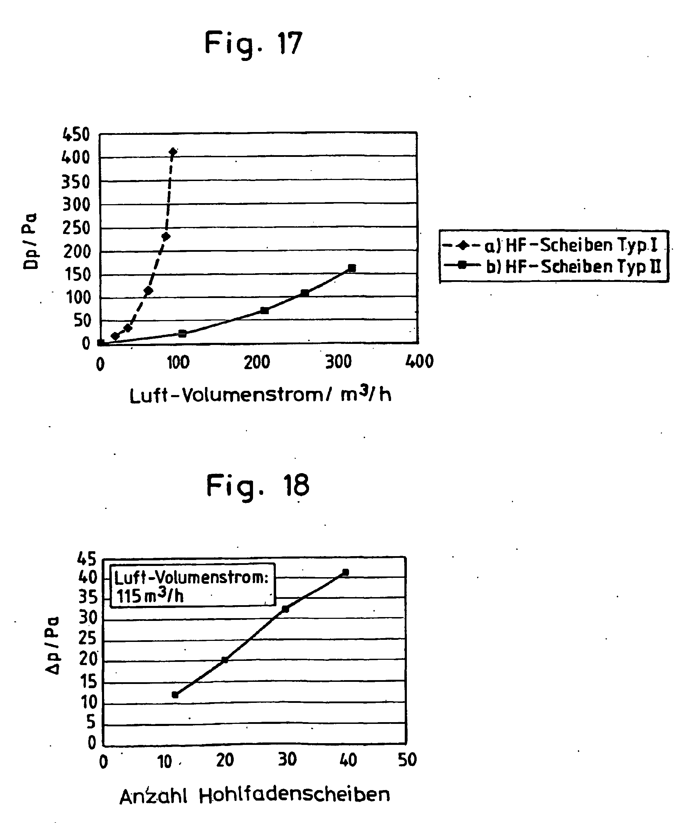

Beispiel 2: Einfluß des Durchmessers der mit Hohlfadenmembranen 13 versehenen Rahmen 16: Es wurden zwei erfindungsgemäße Vorrichtungen 10 hergestellt. Die Vorrichtungen 10 wurden mit je 20 mit Hohlfadenmembranen 13 versehenen Rahmen 16 bestückt. Die erste Vorrichtung 10 mit Rahmen 16, Typ I, die zweite mit Rahmen Typ II. Der innere Durchmesser des Rahmens 16 Typ I betrug 75 mm, die Dicke des Rahmens 2 mm. Die Rahmen waren mit jeweils 21 Hohlfadenmembranen bestückt. Die Ausrichtung der Hohlfadenmembranen 13 wurde um 30° versetzt vorgenommen. Zwischen die Rahmen 16 wurden Abstandshalterrahmen 24 Typ S1 bzw. Typ S3 eingefügt. Der innere Durchmesser des Abstandshalterahmens 24 des Typs S1 betrug 75 mm, die Dicke 1 mm. Der Abstandshalterahmen 24 enthielt keinen Quersteg 240. Der innere Durchmesser des Abstandshalterahmens 24 des Typs S3 betrug 165 mm, die Dicke 1 mm. Der Abstandshalterahmen 24 enthielt einen Quersteg 240. Die äußere Membranfläche betrug bei der ersten Vorrichtung 10 0,088 m², bei der zweiten Vorrichtung 10 0,42 m². Die Abstände zwischen den Hohlfadenmembranen 13 betrugen bei beiden Vorrichtungen 10: a = 3; b = 3. Die Ergebnisse sind in Fig. 17 dargestellt.

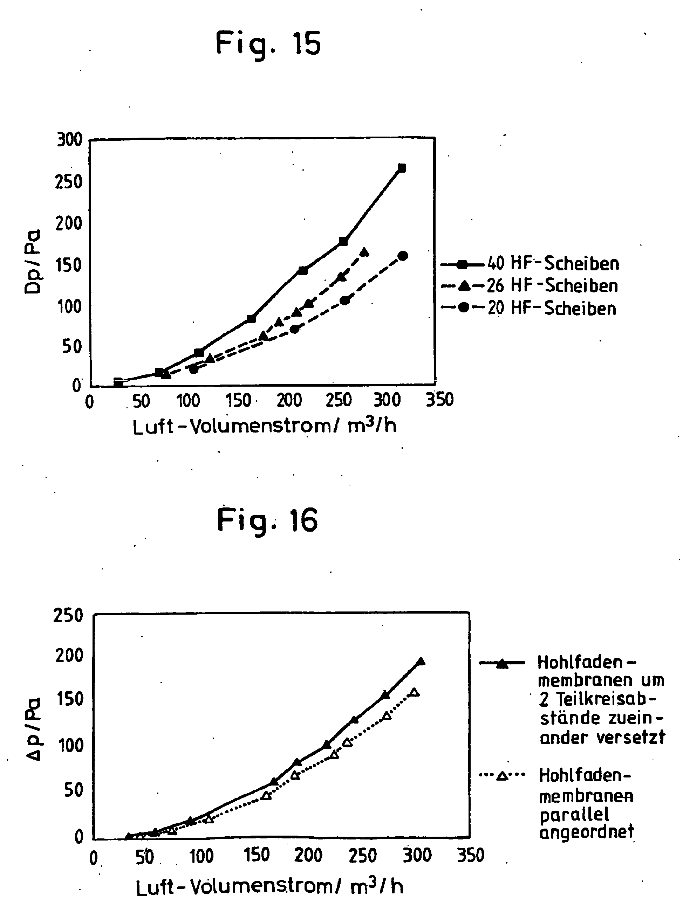

Beispiel 3: Abhängigkeit des Druckabfalls von der Anzahl der mit Hohlfadenmembranen 13 versehenen Rahmen 16: Es wurden Vorrichtungen 10 mit unterschiedlicher Anzahl von Rahmen Typ II hergestellt. Die Ausrichtung der Hohlfadenmembranen 13, die Anordnung der Abstandselemente 23 und die Abstandsmaße "a" und "b" entsprachen denen in Beispiel 2 angegebenen. Die mit Hohlfadenmembranen 13 versehenen Rahmen 16 wurden mit einem Volumenstrom von 115 m³/h überströmt. Es wurde eine nahezu lineare Abhängigkeit des Druckabfalls von der Anzahl der mit Hohlfadenmembranen 13 versehenen Rahmen 16 gefunden, Fig. 15.

Beispiel 4: Abhängigkeit des Druckabfalls vom Volumenstrom: Es wurden drei Vorrichtungen mit 20, 26 und 40 mit Hohlfadenmembranen 13 versehenen Rahmen 16 Typ II bestückt. Abstände, Ausrichtung und Anordnung von Abstandshalterrahmen 24 wie bei Beispiel 2. Die entsprechenden Membranflächen (äußere Fläche der Hohlfadenmembranen) betrugen 0,42 m²; 0,54 m²; 0,83 m³. Der Volumenstrom, der die Hohlfadenmembranen überströmte, wurde variiert. In Fig. 15 ist die Abhängigkeit des Druckabfalls vom Volumenstrom wiedergegeben.

Beispiel 5: Einfluß der Ausrichtung der Hohlfadenmembranen 13: Es wurden zwei Vorrichtungen 10 mit je 26 mit Hohlfadenmembranen 13 versehenen Rahmen 16 montiert. Variiert wurde die Ausrichtung der Hohlfadenmembranen. 13: Parallel, 30° versetzt.

Der gemessene Druckabfall in Abhängigkeit vom Volumenstrom ist in Fig. 16 aufgetragen.

### Bezugszeichenliste

- 10: Vorrichtung
- 11: Gasgemisch
- 13: Hohlfadenmembran
- 130: Hohlraum
- 131: Einlaß
- 132: Auslaß
- 14: Abstand (Hohlfadenmambran)
- 141: Lasche
- 142: Lasche
- 16: Rahmen (Membranrahmen)
- 17: Rahmen- bzw. Membranstapel
- 18: Kodierungselement
- 19: Ebene
- 20: Abstand (Kodierungsloch)
- 21: Loch
- 22: Teilkreis
- 23: Abstandselement
- 24: Rahmen (Abstandselement)
- 240: Steg
- 25: Umlenkelement
- 250: Rahmen (Umlenkelement)
- 251: erster Randbereich
- 252: zweiter Randbereich
- 253: Ebene (Umlenkelement)
- 26: Gehäuse
- 260: fluiddichter Raum
- 261: Gehäuseinnenfläche
- 262: Zulauf
- 263: Ablauf
- 264: Einlaßöffnung
- 265: Auslaßöffnung
- 27: Rahmen (Netzrahmen)
- 270: netzartige Struktur
- 28: Druckstück
- 29: Druckstück

## Patentansprüche

1. Vorrichtung zur Abtrennung wenigstens einer Komponente aus einem Gasgemisch oder einem Flüssigkeitsgemisch, wobei ein Aufnahmefluid durch den Hohlraum (130) einer Mehrzahl im Wesentlichen parallel beabstandeter, von als Hohlfadenmembranen (13) mit offenen Enden (131, 132) ausgebildeter Membranen strömt und das Gasgemisch (11) oder Flüssigkeitsgemisch Im Wesentlichen senkrecht zu den Längsachsen der Hohlfadenmembranen (13) über die Membranen geleitet wird, mehrere Hohlfadenmembranen (13) jeweils In einem Rahmen (16) befestigt aufgespannt sind und eine Mehrzahl von Rahmen (16) zur Bildung eines Rahmen- bzw. Membranstapels (17) ohne dauerhafte Verbindung übereinander angeordnet Ist und ein Gehäuse (26) vorgesehen Ist, in dem der Rahmen- bzw. Membranstapel (17) unter Bildung eines fluiddichten Raumes (260) für das Aufnahmefluid zwischen den Rahmen (16; 24; 250) und der Gehäuseinnenfläche (261) aufgenommen wird, **dadurch gekennzeichnet, dass** die Rahmen (16) aufgrund einer geeigneten Ausbildung der Form und der Wahl des Werkstoffs derart ausgebildet sind, dass sich die Rahmen (16) ohne gesonderte weitere Dichtungsmaßnahmen oder Dichtungsmittel gegeneinander sowie gegenüber der Gehäuseinnenfläche fluiddicht abdichten.

2. Vorrichtung nach Anspruch 1, **dadurch gekennzeichnet, dass** die offenen Enden der Hohlfadenmembranen (13) jeweils deren Einlass (131) bzw. deren Auslass (132) für das die Hohlfadenmembranen (13) durchströmende Aufnahmefluid bilden.

3. Vorrichtung nach Anspruch 1 oder 2, **dadurch gekennzeichnet, dass** der Abstand (14) zweier benachbarter Hohlfadenmembranen (13) voneinander im Bereich des 1,5- bis 4-fachen des äußeren Durchmessers der Hohlfadenmembranen (13) liegt.

4. Vorrichtung nach einem der Ansprüche 1 bis 3, **dadurch gekennzeichnet, dass** die Rahmen (16) im Wesentlichen kreisförmig ausgebildet sind.

5. Vorrichtung nach einem oder mehreren der Ansprüche 1 bis 4, **dadurch gekennzeichnet, dass** der Rahmen (16) Kodierungselemente (18) aufweist, mit denen eine gegenseitige, feste Ausrichtung der Längsachsen der Ebenen (19) der Hohlfadenmembranen (13) gestapelt übereinander angeordneter Rahmen (18) bewirkt wird.

6. Vorrichtung nach Anspruch 5, **dadurch gekennzeichnet, dass** die Kodierungselemente (18) in Form einer Mehrzahl von im Rahmen (16) ausgebildeter, definiert voneinander beabstandeter (20) Löcher (21) ausgebildet sind.

7. Vorrichtung nach Anspruch 6, **dadurch gekennzeichnet, dass** die Löcher (21) bei kreisförmig ausgebildeten Rahmen (16) auf einem Teilkreis (22) ausgebildet sind.

8. Vorrichtung nach einem oder mehreren der Ansprüche 1 bis 7, **dadurch gekennzeichnet, dass** in dem Rahmen- bzw. Membranstapel (17) im Wesentlichen zwischen jeweils zwei übereinander angeordneten Rahmen (16) ein Abstandselement (23) angeordnet ist.

9. Vorrichtung nach Anspruch 8, **dadurch gekennzeichnet, dass** das Abstandselement (23) einen Rahmen (24) nach Art des Rahmens (16) für die Aufnahme der Hohlfadenmembranen (13) aufweist, wobei der Rahmen (24) wenigstens einen Steg (240) aufweist, der zwei im Wesentlichen gegenüberliegende Seiten des Rahmens (24) verbindet.

10. Vorrichtung nach einem oder mehreren der Ansprüche 1 bis 9, **dadurch gekennzeichnet, dass** in dem. Rahmen- bzw. Membranstapel (17) wenigstens ein nach Art des Rahmens (16) für die Aufnahme der Hohlfadenmembranen (13) ausgebildetes, rahmenförmiges Umlenkelement (25) für das Aufnahmefluid angeordnet ist.

11. Vorrichtung nach Anspruch 10, **dadurch gekennzeichnet, dass** das Umlenkelement (25) einen ersten Randbereich des Rahmens (250), der In der Ebene (253) des Umlenkelementes (25) gegenüber einem zweiten Randbereich für den Durchtritt des Aufnahmefluids schmaler ausgebildet ist, aufweist.

12. Vorrichtung nach Anspruch 11, **dadurch gekennzeichnet, dass** der fluiddichte Raum (260) einen im Gehäuse (26) ausgebildeten Zulauf (262) und einen Ablauf (263) für das Aufnahmefluid aufweist.

13. Vorrichtung nach einem oder mehreren der Ansprüche 1 bis 12, **dadurch gekennzeichnet, dass** der Rahmen- bzw. Membranstapel (17) wenigstens einen nach Art des Rahmens (16) für die Aufnahme der Hohlfadenmembranen (13) ausgebildeten Rahmen (27) aufweist, der eine netzartige Struktur (270) aufweist, die den Rahmen (27) überspannt.

14. Vorrichtung nach einem oder mehreren der Ansprüche 1 bis 13, **dadurch gekennzeichnet, dass** die Hohlfadenmembranen (13) innen mit Silikon beschichtet sind.

15. Vorrichtung nach einem oder mehreren der Ansprüche 1 bis 14, **dadurch gekennzeichnet, dass** die Hohlfadenmembranen (13) mikroporös ausgebildet sind.

16. Verwendung einer Vorrichtung nach einem oder mehreren der Ansprüche 1 bis 15 für das Be- und Entgasen von Flüssigkeiten, das Befeuchten von Gasen, für Membrantrennprozesse wie Pervaporation, Dialyse sowie Gastrennung oder für Filtrationsprozesse mit halbdurchlässigen Hohlfadenmembranen (13).

## Claims

1. Device for separating at least one component from a gas mixture or a liquid mixture, in which an entraining fluid flows through the cavity (130) of a plurality of membranes with open ends (131, 132) in the form of hollow filament membranes (13) spaced apart from one another in a parallel arrangement, and the gas mixture (11) or fluid mixture is fed across the membranes essentially perpendicular to the longitudinal axes of the hollow filament membranes (13), several of which hollow filament membranes (13) are respectively secured, clamped in a frame (16), and a plurality of frames (16) are arranged one above the other with no permanent connection to form a frame or membrane stack (17), and a housing (26) is provided in which the frame or membrane stack (17) is accommodated forming a fluid-tight chamber (260) for the entraining fluid between the frame (16; 24; 250) and the housing internal surface (261), **characterised in that**, due to an appropriate design in terms of shape and choice of material, the design of the frames (16) is such that the frames(16) are sealed so as to be fluid-tight with respect to one another and with respect to the housing internal surface without any separate additional sealing features or sealing means.

2. Device as claimed in claim 1, **characterised in that** the open ends of the hollow filament membranes (13) constitute respectively their inlet (131) or their outlet (132) for the entraining fluid flowing through the hollow filament membranes (13).

3. Device as claimed in claim 1 or 2, **characterised in that** the distance (14) between two adjacent hollow filament membranes (13) is in the range of 1.5 to 4 times the external diameter of the hollow filament membranes (13).

4. Device as claimed in one of claims 1 to 3, **characterised in that** the frames (16) are essentially circular in shape.

5. Device as claimed in one or more of claims 1 to 4, **characterised in that** the frames (16) have coding elements (18) as a means of obtaining a mutual, fixed orientation of the longitudinal axes of the planes (19) of the hollow filament membranes (13) in frames (16) stacked one above the other.

6. Device as claimed in claim 5, **characterised in that** the coding elements (18) are provided in the form of a plurality of holes (21) in the frame (16) spaced at a defined distance (20) apart from one another.

7. Device as claimed in claim 6, **characterised in that**, if the frames (16) are circular in shape, the holes (21) are formed on a part-circle (22).

8. Device as claimed in one or more of claims 1 to 7, **characterised in that** a spacer element (23) is disposed in the frame or membrane stack (17), essentially between two respective frames (16) arranged one above the other.

9. Device as claimed in claim 8, **characterised in that** the spacer element (23) has a frame (24) of the same type as the frame (16) for accommodating the hollow filament membranes (13), which frame (24) has at least one web (240) which connects two essentially oppositely lying sides of the frame (24).

10. Device as claimed in one or more of claims 1 to 9, **characterised in that** at least one frame-type baffle element (25) of the same type as the frame (16) for accommodating the hollow filament membranes (13) is disposed in the frame or membrane stack (17) for the entraining fluid.

11. Device as claimed in claim 10, **characterised in that** the baffle element (25) has a first peripheral region of the frame (250) which is narrower in the plane (253) of the baffle element (25) than a second peripheral region for the circulation of the entraining fluid.

12. Device as claimed in claim 11, **characterised in that** the fluid-tight chamber (260) has an inlet (262) and an outlet (263) in the housing (26) for the entraining fluid.

13. Device as claimed in one or more of claims 1 to 12, **characterised in that** the frame or membrane stack (17) has at least one frame (27) of the same type as the frame (16) for accommodating the hollow filament membranes (13), which has a net-type structure (270) spanning the frame (27).

14. Device as claimed in one or more of claims 1 to 13, **characterised in that** the hollow filament membranes (13) are internally coated with silicone.

15. Device as claimed in one or more of claims 1 to 14, **characterised in that** the hollow filament membranes (13) are micro-porous.

16. Use of a device as claimed in one or more of claims 1 to 15 for incorporating gases in and removing gases from fluids, for wetting gases, for membrane separation processes such as pervaporation, dialysis and gas separation or for filtration processes with semi-permeable hollow filament membranes (13).

## Revendications

1. Dispositif destiné à séparer au moins un composant d'un mélange de gaz ou d'un mélange de fluides, un fluide de réception circulant à travers la cavité (130) d'une pluralité de membranes distantes sensiblement parallèlement, conçues comme des membranes à fibre creuse (13) dotées d'extrémités ouvertes (131, 132) et le mélange de gaz (11) ou le mélange de fluides étant acheminé sensiblement perpendiculairement aux axes longitudinaux des membranes à fibre creuse (13) par l'intermédiaire des membranes, plusieurs membranes à fibre creuse (13) étant respectivement tendues fixement dans un cadre (16) et une pluralité de cadres (16) étant disposés les uns sur les autres sans être reliés durablement, pour former une pile de cadres et/ou de membranes (17) et un boîtier (26) étant prévu, dans lequel est reçue la pile de cadres et/ou de membranes (17) formant une chambre étanche au fluide (260) pour le fluide de réception entre les cadres (16, 24 ; 250) et la surface intérieure de boîtier (261), **caractérisé en ce que** les cadres (16), en raison d'une configuration appropriée du moule et de la sélection du matériau, sont conçus de telle sorte que les cadres (16) sont étanchéifiés de manière étanche au fluide les uns par rapport aux autres et vis-à-vis de la surface intérieure de boîtier sans autres mesures d'étanchéité spéciales ou moyens d'étanchéité spéciaux.

2. Dispositif selon la revendication 1, **caractérisé en ce que** les extrémités ouvertes des membranes à fibre creuse (13) forment respectivement l'orifice d'admission (131) et/ou l'orifice d'évacuation (132) desdites membranes pour le fluide de réception circulant à travers les membranes à fibre creuse (13).

3. Dispositif selon la revendication 1 ou 2, **caractérisé en ce que** la distance (14) entre deux membranes à fibre creuse (13) voisines se situe dans la plage de 1,5 à 4 fois le diamètre extérieur des membranes à fibre creuse (13).

4. Dispositif selon l'une quelconque des revendications 1 à 3, **caractérisé en ce que** les cadres (16) sont sensiblement circulaires.

5. Dispositif selon l'une ou plusieurs des revendications 1 à 4, **caractérisé en ce que** le cadre (16) comprend des éléments de codage (18), provoquant une orientation mutuelle et fixe des axes longitudinaux des plans (19) des membranes à fibre creuse (13) des cadres (16) empilés les uns sur les autres.

6. Dispositif selon la revendication 5, **caractérisé en ce que** les éléments de codage (18) sont conçus sous forme d'une pluralité de trous (21) formés dans le cadre (16), distants (20) les uns des autres de façon définie.

7. Dispositif selon la revendication 6, **caractérisé en ce que** les trous (21), dans le cas des cadres (16) conçus de façon circulaire, sont formés sur un arc de cercle (22) .

8. Dispositif selon l'une ou plusieurs des revendications 1 à 7, **caractérisé en ce qu'**un élément d'espacement (23) est disposé dans la pile de cadres et/ou de membranes (17) sensiblement entre chaque fois deux cadres (16) superposés.

9. Dispositif selon la revendication 8, **caractérisé en ce que** l'élément d'espacement (23) comprend un cadre (24) à la façon du cadre (16) pour loger les membranes à fibre creuse (13), le cadre (24) comprenant au moins une nervure (240) qui relie deux côtés sensiblement opposés du cadre (24).

10. Dispositif selon l'une ou plusieurs des revendications 1 à 9, **caractérisé en ce que**, pour le fluide de réception, au moins un élément de déviation (25) en forme de cadre, conçu à la façon du cadre (16) pour loger les membranes à fibre creuse (13), est disposé dans la pile de cadres et/ou de membranes (17).

11. Dispositif selon la revendication 10, **caractérisé en ce que** l'élément de déviation (25) comprend une première zone latérale du cadre (250), qui est située dans le plan (253) de l'élément de déviation (25) en étant plus étroite qu'une seconde zone latérale pour le passage du fluide de réception.

12. Dispositif selon la revendication 11, **caractérisé en ce que** la chambre étanche au fluide (260) comprend un orifice d'alimentation (262) formé dans le boîtier (26) et un orifice d'écoulement (263) pour le fluide de réception.

13. Dispositif selon l'une ou plusieurs des revendications 1 à 12, **caractérisé en ce que** la pile de cadres et/ou de membranes (17) comprend au moins un cadre (27) conçu à la façon du cadre (16) pour loger les membranes à fibre creuse (13), lequel cadre comprend une structure du type filet (270) qui recouvre le cadre (27) .

14. Dispositif selon l'une ou plusieurs des revendications 1 à 13, **caractérisé en ce que** les membranes à fibre creuse (13) sont revêtues à l'intérieur de silicone.

15. Dispositif selon l'une ou plusieurs des revendications 1 à 14, **caractérisé en ce que** les membranes à fibre creuse (13) sont conçues de façon microporeuse.

16. Utilisation d'un dispositif selon l'une ou plusieurs des revendications 1 à 15 pour le gazage et le dégazage de fluides, l'humidification de gaz, pour les processus de séparation à membrane comme la pervaporation, la dialyse ainsi que la séparation de gaz ou pour les processus de filtration avec des membranes à fibre creuse (13) semi-perméables.
